# EUROPÄISCHE PATENTSCHRIFT

(11) **EP 4 031 412 B1**
(45) Veröffentlichungstag und Bekanntmachung des Hinweises auf die Patenterteilung: **04.10.2023**
(21) Anmeldenummer: 20753362.1
(22) Anmeldetag: 10.08.2020
(51) Int. Cl.: B60Q 1/068, F21S 45/47

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 20.09.2019 EP 19198689
(43) Veröffentlichungstag der Anmeldung: 27.07.2022
(73) Patentinhaber: ZKW Group GmbH, 3250 Wieselburg (AT)
(72) Erfinder: STEINKELLNER, Johann, 3684 St. Oswald (AT)
(74) Vertreter: Patentanwaltskanzlei Matschnig & Forsthuber OG
(86) Internationale Anmeldenummer: PCT/EP2020/072376
(87) Internationale Veröffentlichungsnummer: WO 2021/052679

(56) Entgegenhaltungen:
- EP-A1- 3 299 642
- FR-A1- 3 055 265
- FR-A1- 3 056 701
- US-A- 5 762 415
- US-A1- 2009 207 626

## Beschreibung

Die Erfindung betrifft eine Beleuchtungsvorrichtung für einen Kraftfahrzeugscheinwerfer, welche Beleuchtungsvorrichtung Folgendes umfasst:
- ein Lichtmodul, umfassend:
   - zumindest eine Lichtquelle,
   - eine Primäroptik zum Formen einer Lichtverteilung aus dem Licht der zumindest einen Lichtquelle,
   - einen mit der zumindest einen Lichtquelle in thermischen Kontakt stehenden Kühlkörper, der eingerichtet ist, Wärme von der zumindest einen Lichtquelle abzuführen, und
   - einen Haltekörper, welcher eingerichtet ist, die Primäroptik in Bezug auf die zumindest eine Lichtquelle in ihrer Position zu halten, wobei der Haltekörper und der Kühlkörper mittels zumindest eines Befestigungsmittels miteinander verbunden sind,
- und einen Tragerahmen, an welchem das Lichtmodul über zumindest eine Einstellschraube befestigt ist, wobei die Einstellschraube einen Schraubkopf und einen Schraubabschnitt entlang einer Längsachse umfasst, welcher Schraubkopf an dem Lichtmodul gelenksartig gelagert ist und welcher Schraubabschnitt an dem Tragerahmen angreift.

Ferner betrifft die Erfindung einen Kraftfahrzeugscheinwerfer mit zumindest einer erfindungsgemäßen Beleuchtungsvorrichtung.

Üblicherweise können eine oder mehrere Lichtmodule vorgesehen sein, die allein oder gemeinsam auf einem Tragerahmen montiert werden, welcher Tragerahmen anschließend in einem Kraftfahrzeugscheinwerfer eingebaut wird.

Um die Lichtmodule mit dem Tragerahmen mechanisch zu verbinden, ist aus dem Stand der Technik bekannt, dass die Lichtmodule mittels Schrauben, welche über den Tragerahmen in den Kühlkörper der Beleuchtungsvorrichtung eingeschraubt werden, montiert werden.

Dazu sind allerdings beispielsweise zusätzliche Bauteile notwendig, die als Schnittstelle zwischen dem Lichtmodul und der Einstellschraube dienen, wobei die Fertigung dieser Bauteile und die dazu korrespondierende herzustellende Lagerstelle an dem Lichtmodul Fertigungstoleranzen unterworfen sind. Ferner muss für jede Lagerstelle und dem korrespondierendem Bauteil ein komplexer Befestigungsmechanismus entworfen und gefertigt werden, da Kraftfahrzeugscheinwerfer in einem Fahrzeug im Betrieb Vibrationen unterlegen sind, die dazu führen können, dass sich nicht fest gelagerte Schrauben wieder lösen können.

Die FR 3 055 264 A1 offenbart eine Beleuchtungsvorrichtung aus dem Stand der Technik.

Es ist eine Aufgabe der Erfindung eine verbesserte Beleuchtungsvorrichtung bereitzustellen.

Diese Aufgabe wird dadurch gelöst, dass das Lichtmodul zumindest eine Lagereinrichtung zur gelenkartigen Lagerung des Schraubkopfes der zumindest einen Einstellschraube umfasst, welche Lagereinrichtung eine erste und eine zweite Lagerschale umfasst, wobei die erste und die zweite Lagerschale durch Zusammenführen der beiden Lagerschalen gemeinsam eine Gelenkspfanne bilden, wobei die erste Lagerschale an dem Haltekörper angeordnet und einstückig mit diesem hergestellt ist und die zweite Lagerschale an dem Kühlkörper angeordnet und einstückig mit diesem hergestellt ist, und wobei die Lagereinrichtung eingerichtet ist, den Schraubkopf der zumindest einen Einstellschraube zu lagern, und wobei die Gelenkspfanne den Schraubkopf der zumindest einen Einstellschraube derart umschließt, dass die zumindest eine Einstellschraube gegen eine Verschiebung in Richtung ihrer Längsachse gesichert ist, wobei der Schraubkopf der zumindest einen Einstellschraube drehbar um die Längsachse der Einstellschraube in der zumindest einen Lagereinrichtung gelagert ist, sodass die Einstellschraube und die entsprechende Lagereinrichtung ein sogenanntes Kugelgelenk bilden.

Durch die Lösung werden zusätzliche Bauteile zur Befestigung und Nutzung der Einstellschrauben wie im Stand der Technik vermieden, wodurch auch eine Kostenreduktion erzielt wird.

Ebenfalls wird auch der Abstimmungsaufwand zwischen den erwähnten Bauteilen aus dem Stand der Technik vermieden.

Mit Vorteil kann vorgesehen sein, dass die zumindest eine Einstellschraube einen Gewinde aufweisenden Gewindeabschnitt und der Tragerahmen zumindest ein Gegengewindeelement umfasst, welches zumindest eine Gegengewindeelement ein zu dem Gewinde der zumindest einen Einstellschraube korrespondierendes Gegengewinde aufweist.

Dabei kann vorgesehen sein, dass die Einstellschrauben selbstschneidend ausgebildet sind und das Gegengewinde aufgrund des erstmaligen Einschraubens der Einstellschraube in den Tragerahmen entsteht.

Vorteilhafterweise kann das Lichtmodul zumindest zwei Lagereinrichtungen umfassen, wobei die Beleuchtungsvorrichtung eine der Anzahl der Lagereinrichtungen entsprechende Anzahl an korrespondierenden Einstellschrauben aufweist.

Es kann vorgesehen sein, dass das Lichtmodul genau drei Lagereinrichtungen umfasst, wobei die Beleuchtungsvorrichtung zumindest drei zu den entsprechenden Lagereinrichtungen korrespondierende Einstellschrauben umfasst.

Es kann ferner vorgesehen sein, dass die zu den Einstellschrauben korrespondierenden Gegengewindeelemente des Tragerahmens derart an dem Tragerahmen angeordnet sind, dass gedachte Verbindungslinien zwischen den Gegengewindeelementen ein rechtwinkeliges Dreieck bilden, vorzugsweise ein gleichschenkeliges rechtwinkeliges Dreieck.

Die so gedachten Verbindungslinien entsprechen in einem eingebauten Zustand der Beleuchtungsvorrichtung in einem Kraftfahrzeugscheinwerfer, welcher ordnungsgemäß in einem Kraftfahrzeug montiert ist, beispielsweise einer horizontalen und einer vertikalen Schwenkachse. Eine solche Anordnung der Gegengewindeelemente an dem Tragerahmen zusammen mit den Einstellschrauben und den entsprechenden Lagereinrichtungen des Lichtmoduls kann auch als Einstelldreiecke-System bezeichnet werden.

Unter dem Begriff "Einstelldreieck-System" wird im Zusammenhang mit der vorliegenden Erfindung generell ein Einstellsystem verstanden, welches über drei Stellelemente (z.B. Einstellschrauben), die mit dem korrespondierenden Lichtmodul und mit dem Tragrahmen zumindest drehbar verbunden sind, das Lichtmodul bezüglich des Tragrahmens verstellt. Dabei erfolgt normalerweise das Verstellen mittels mechanischer und/oder elektromotorischer Stellmitteln, die der Beleuchtungsvorrichtung zugeordnet sind.

Es kann vorgesehen sein, dass zumindest eine Einstellschraube in einem Langloch in dem Tragerahmen angeordnet ist. Es kann auch vorgesehen sein, dass zumindest zwei, vorzugsweise genau zwei Einstellschrauben jeweils in einem Langloch in dem Tragerahmen angeordnet sind, beispielsweise ist eine Einstellschraube in einem horizontal ausgebildeten Langloch angeordnet und eine andere Einstellschraube in einem vertikal ausgebildeten Langloch angeordnet.

Die Begriffe "vertikal" und "horizontal" beziehen sich hierbei auf eine in einen Kraftfahrzeugscheinwerfer eingebaute Beleuchtungsvorrichtung, wobei der Kraftfahrzeugscheinwerfer ordnungsgemäß in einem Kraftfahrzeug eingebaut ist.

Es kann dabei günstig sein, wenn die Längsachsen der Einstellschrauben im zumindest teilweise eingeschraubten Zustand der Einstellschrauben an dem Tragerahmen parallel zueinander angeordnet sind.

Es kann vorgesehen sein, dass der Schraubkopf der zumindest einen Einstellschraube als Gelenkskopf bzw. als Kugelkopf ausgebildet ist.

Dadurch bildet die zumindest eine Einstellschraube zusammen mit der zumindest einen Lagereinrichtung ein Kugelgelenk, wobei prinzipiell dreiachsige Drehungen der Einstellschraube möglich (zumindest in einem gewissen Ausmaß), translatorische Bewegungen entlang der Längsachse der Einstellschraube allerdings nicht möglich sind.

Die Aufgabe wird ebenso mit einem Kraftfahrzeugscheinwerfer mit zumindest einer erfindungsgemäßen Beleuchtungsvorrichtung gelöst.

Nachfolgend wird die Erfindung anhand von beispielhaften Zeichnungen näher erläutert. Hierbei zeigt
Fig. 1 eine Seitenansicht einer beispielhaften Beleuchtungsvorrichtung mit einem Lichtmodul, welcher mittels Einstellschrauben auf einem Tragerahmen befestigt sind, wobei die Einstellschrauben jeweils in einer Lagereinrichtung des Lichtmoduls gelenkig und drehbar gelagert sind, Fig. 2 eine Detailansicht einer in einer Lagereinrichtung gelagerten Einstellschraube,
Fig. 3 eine Rückansicht der beispielhaften Beleuchtungsvorrichtung aus Fig. 1, und
Fig. 4 eine Rückansicht einer weiteren beispielhaften Beleuchtungsvorrichtung.

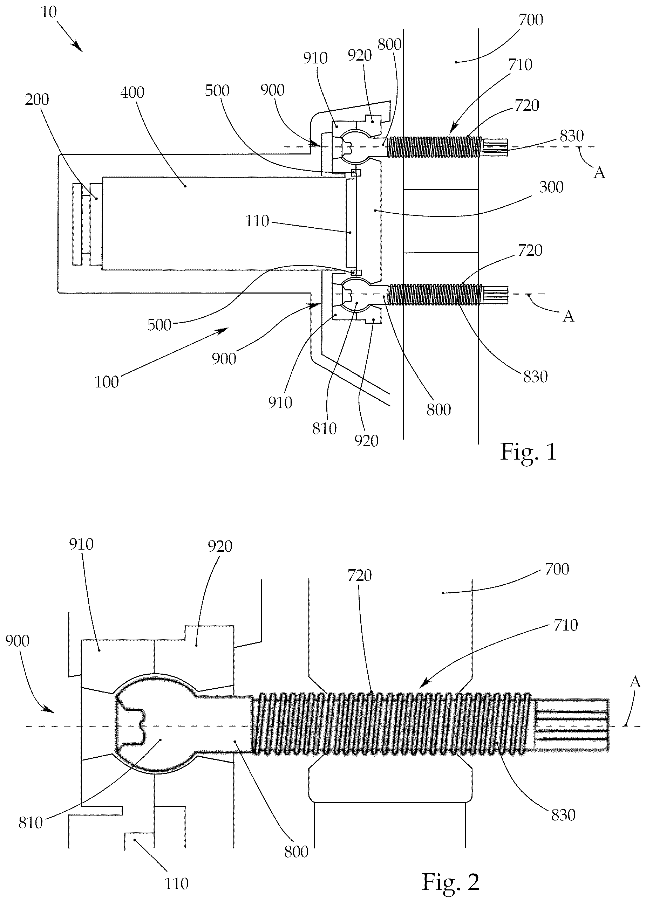

**Fig. 1** zeigt eine beispielhafte Beleuchtungsvorrichtung **10** für einen Kraftfahrzeugscheinwerfer, welche Beleuchtungsvorrichtung **10** ein Lichtmodul **100** und einen Tragerahmen **700** umfasst, an welchem das Lichtmodul **100** mittels Einstellschrauben **800** befestigt ist, wobei je eine Einstellschraube **800** einen Schraubkopf **810,** welcher als Kugelkopf ausgebildet ist, und eine Längsachse **A** umfasst, und wobei der Schraubkopf **810** an dem Lichtmodul gelenksartig gelagert ist.

Das Lichtmodul **100** selbst umfasst dabei eine Lichtquelle **110,** eine Primäroptik **200** zum Formen einer Lichtverteilung aus dem Licht der Lichtquelle **110,** einen mit der zumindest einen Lichtquelle **110** in thermischen Kontakt stehenden Kühlkörper **300,** der eingerichtet ist, Wärme von der Lichtquelle **110** abzuführen, und einen Haltekörper **400,** welcher eingerichtet ist, die Primäroptik **200** in Bezug auf die zumindest eine Lichtquelle **110** in ihrer Position zu halten, wobei der Haltekörper **400** und der Kühlkörper **300** mittels zweier Befestigungsmittel **500** miteinander verbunden sind, wobei die Befestigungsmittel **500** beispielsweise Schrauben oder Ähnliches sein können.

Ferner umfasst das Lichtmodul **100** drei Lagereinrichtungen **900** (in Fig. 1 sind aufgrund der gewählten Seitenansicht nur zwei Lagereinrichtungen zu sehen), welche Lagereinrichtungen **900** jeweils eine erste und eine zweite Lagerschale **910, 920** umfassen, wobei die erste und die zweite Lagerschale **910, 920** gemeinsam eine Gelenkspfanne bilden. Die Lagereinrichtungen **900** sind jeweils eingerichtet, den Schraubkopf **810** der Einstellschrauben **800** zu lagern, wobei die Gelenkspfanne den Schraubkopf **810** der Einstellschrauben **800** derart umschließt, dass die Einstellschraube **800** gegen eine Verschiebung in Richtung ihrer Längsachse **A** gesichert ist, der Schraubkopf **810** bzw. die Einstellschraube **800** drehbar um ihre Längsachse **A** gelagert ist. Die Einstellschraube **800** und die entsprechende Lagereinrichtung **900** bilden mit anderen Worten ein sogenanntes Kugelgelenk. Eine detaillierte Ansicht zu dem Eingriff zwischen Lagereinrichtung **900** und Einstellschraube **800** ist in **Fig. 2** gezeigt. Prinzipiell sind dreiachsige Drehungen der Einstellschraube **800** möglich, translatorische Bewegungen, wie bereits erwähnt, sind allerdings nicht möglich.

Die erste Lagerschale **910** ist hierbei an dem Halterkörper **400** angeordnet und einstückig mit diesem hergestellt. Die zweite Lagerschale **920** ist an dem Kühlkörper **300** angeordnet und ebenfalls einstückig mit diesem hergestellt.

Wie bereits erwähnt, ist das Lichtmodul **100** mittels der Einstellschrauben **800** auf dem Tragerahmen **700** befestigt, wobei die Einstellschrauben **800** hierfür einen Gewinde **830** aufweisenden Gewindeabschnitt und der Tragerahmen entsprechende Gegengewindeelemente **710** aufweist, welche Gegengewindeelemente **710** jeweils ein zu dem Gewinde der Einstellschrauben **800** korrespondierendes Gegengewinde **720** aufweist.

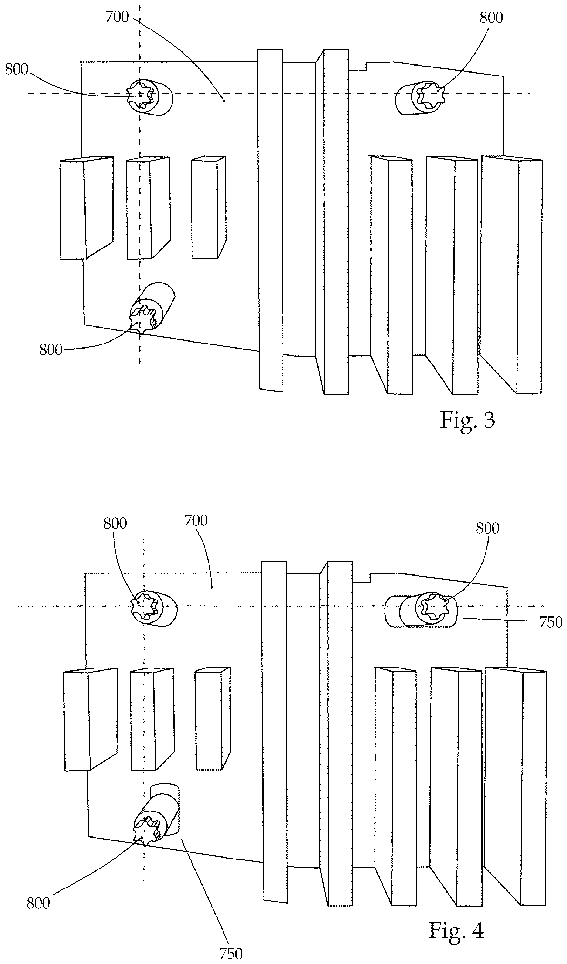

Durch die Einstellschrauben **800** kann das Lichtmodul **100** in Bezug auf den Tragerahmen **700** in seiner Ausrichtung justiert werden. Hierfür sind die Einstellschrauben **800** sowie die dazu korrespondierenden Gegengewindeelemente **710** des Tragerahmens **700** derart an dem Tragerahmen **700** angeordnet, dass gedachte Verbindungslinien zwischen den Gegengewindeelementen **710** ein rechtwinkeliges Dreieck bilden, vorzugsweise ein gleichschenkeliges rechtwinkeliges Dreieck, wobei die Einstellschrauben **800** derart in die entsprechenden Gegengewindeelemente **710** zumindest teilweise eingeschraubt sind, dass die Einstellschrauben **800** an dem Tragerahmen **700** parallel zueinander angeordnet sind. **Fig. 3** zeigt hierzu eine Rückansicht der beispielhaften Beleuchtungsvorrichtung **10,** wobei die oben erwähnten, gedachten Verbindungslinien zwischen den Einstellschrauben **800** strichliert eingezeichnet sind.

Eine solche Anordnung der Einstellschrauben **800** bzw. der Gegengewindeelemente **710** kann auch als Einstelldreieck-System bezeichnet werden. Unter dem Begriff "Einstelldreieck-System" wird im Zusammenhang mit der vorliegenden Erfindung generell ein Einstellsystem verstanden, welches über drei Stellelemente (z.B. Einstellschrauben), die mit dem korrespondierenden Lichtmodul und mit dem Tragrahmen zumindest drehbar verbunden sind, das Lichtmodul bezüglich des Tragrahmens verstellt. Dabei erfolgt normalerweise das Verstellen mittels mechanischer und/oder elektromotorischer Stellmitteln, die der Beleuchtungsvorrichtung zugeordnet sind.

Die Begriffe "vertikal" und "horizontal" beziehen sich hierbei auf eine in einen Kraftfahrzeugscheinwerfer eingebaute Beleuchtungsvorrichtung, wobei der Kraftfahrzeugscheinwerfer ordnungsgemäß in einem Kraftfahrzeug eingebaut ist.

**Fig. 4** zeigt eine weitere Rückansicht einer beispielhaften Beleuchtungsvorrichtung, wobei der Schraubabschnitt einer Einstellschraube **800** in einem vertikal ausgebildeten Langloch **750** und der Schraubabschnitt einer anderen Einstellschraube **800** in einem horizontal ausgebildeten Langloch **750** eingreift. Dies ermöglicht bei einer Justierung des Lichtmoduls noch eine weiter Einstellfreiheit. Bei Nichtvorhandensein solcher Langlöcher **750** kann es bei der Justage vorkommen die Schraubköpfe der Einstellschrauben verklemmen oder eine unnötig hohe mechanische Belastung erfahren. Die Langlöcher **750** dienen somit als ergänzende Fehlerausgleichsmöglichkeit während der Justage des Lichtmoduls.

### LISTE DER BEZUGSZEICHEN

| | |
|---|---|
| Beleuchtungsvorrichtung... | 10 |
| Lichtmodul... | 100 |
| Lichtquelle... | 110 |
| Primäroptik... | 200 |
| Kühlkörper... | 300 |
| Haltekörper... | 400 |
| Befestigungsmittel... | 500 |
| Tragerahmen... | 700 |
| Gegengewindeelement... | 710 |
| Gegengewinde... | 720 |
| Langloch... | 750 |
| Einstellschraube... | 800 |
| Schraubkopf... | 810 |
| Gewinde... | 830 |
| Lagereinrichtung... | 900 |
| Erste Lagerschale... | 910 |
| Zweite Lagerschale... | 920 |
| Längsachse... | A |

## Patentansprüche

1. Beleuchtungsvorrichtung für einen Kraftfahrzeugscheinwerfer, welche Beleuchtungsvorrichtung (10) Folgendes umfasst:
- ein Lichtmodul (100), umfassend:
- zumindest eine Lichtquelle (110),
- eine Primäroptik (200) zum Formen einer Lichtverteilung aus dem Licht der zumindest einen Lichtquelle (110),
- einen mit der zumindest einen Lichtquelle (110) in thermischen Kontakt stehenden Kühlkörper (300), der eingerichtet ist, Wärme von der zumindest einen Lichtquelle (110) abzuführen, und
- einen Haltekörper (400), welcher eingerichtet ist, die Primäroptik (200) in Bezug auf die zumindest eine Lichtquelle (110) in ihrer Position zu halten, wobei der Haltekörper (400) und der Kühlkörper (300) mittels zumindest eines Befestigungsmittels (500) miteinander verbunden sind,
- und einen Tragerahmen (700), an welchem das Lichtmodul (100) über zumindest eine Einstellschraube (800) befestigt ist, wobei die Einstellschraube (800) einen Schraubkopf (810) und einen Schraubabschnitt entlang einer Längsachse (A) umfasst, welcher Schraubkopf (810) an dem Lichtmodul (100) gelenksartig gelagert ist und welcher Schraubabschnitt an dem Tragerahmen (700) angreift,
**dadurch gekennzeichnet, dass**
das Lichtmodul (100) zumindest eine Lagereinrichtung (900) zur gelenkartigen Lagerung des Schraubkopfes (810) der zumindest einen Einstellschraube (800) umfasst, welche Lagereinrichtung (900) eine erste und eine zweite Lagerschale (910, 920) umfasst, wobei die erste und die zweite Lagerschale (910, 920) durch Zusammenführen der beiden Lagerschalen gemeinsam eine Gelenkspfanne bilden, wobei die erste Lagerschale (910) an dem Haltekörper (400) angeordnet und einstückig mit diesem hergestellt ist und die zweite Lagerschale (920) an dem Kühlkörper (300) angeordnet und einstückig mit diesem hergestellt ist, und wobei die Lagereinrichtung (900) eingerichtet ist, den Schraubkopf (810) der zumindest einen Einstellschraube (800) zu lagern, und wobei die Gelenkspfanne den Schraubkopf (810) der zumindest einen Einstellschraube (800) derart umschließt, dass die zumindest eine Einstellschraube (800) gegen eine Verschiebung in Richtung ihrer Längsachse (A) gesichert ist, wobei der Schraubkopf (810) der zumindest einen Einstellschraube (800) drehbar um die Längsachse (A) der Einstellschraube (800) in der zumindest einen Lagereinrichtung (900) gelagert ist, sodass die Einstellschraube (800) und die entsprechende Lagereinrichtung (900) ein sogenanntes Kugelgelenk bilden.

2. Beleuchtungsvorrichtung nach Anspruch 1, **dadurch gekennzeichnet, dass** die zumindest eine Einstellschraube (800) einen Gewinde (830) aufweisenden Gewindeabschnitt und der Tragerahmen (700) zumindest ein Gegengewindeelement (710) umfasst, welches zumindest eine Gegengewindeelement (710) ein zu dem Gewinde (830) der zumindest einen Einstellschraube (800) korrespondierendes Gegengewinde (720) aufweist.

3. Beleuchtungsvorrichtung nach Anspruch 1 oder 2, **dadurch gekennzeichnet, dass** das Lichtmodul (100) zumindest zwei Lagereinrichtungen (900) umfasst, wobei die Beleuchtungsvorrichtung (10) eine der Anzahl der Lagereinrichtungen (900) entsprechende Anzahl an korrespondierenden Einstellschrauben (800) aufweist.

4. Beleuchtungsvorrichtung nach Anspruch 3, **dadurch gekennzeichnet, dass** das Lichtmodul (100) genau drei Lagereinrichtungen (900) umfasst, wobei die Beleuchtungsvorrichtung (10) zumindest drei zu den entsprechenden Lagereinrichtungen (900) korrespondierende Einstellschrauben (800) umfasst.

5. Beleuchtungsvorrichtung nach Anspruch 4, **dadurch gekennzeichnet, dass** die zu den Einstellschrauben (800) korrespondierenden Gegengewindeelemente (710) des Tragerahmens (700) derart an dem Tragerahmen (700) angeordnet sind, dass gedachte Verbindungslinien zwischen den Gegengewindeelementen (710) ein rechtwinkeliges Dreieck bilden, vorzugsweise ein gleichschenkeliges rechtwinkeliges Dreieck.

6. Beleuchtungsvorrichtung nach einem der Ansprüche 3 bis 5, **dadurch gekennzeichnet, dass** die Längsachsen (A) der Einstellschrauben (800) im zumindest teilweise eingeschraubten Zustand der Einstellschrauben (800) an dem Tragerahmen (700) parallel zueinander angeordnet sind.

7. Beleuchtungsvorrichtung nach einem der Ansprüche 1 bis 6, **dadurch gekennzeichnet, dass** der Schraubkopf (810) der zumindest einen Einstellschraube (800) als Gelenkskopf bzw. als Kugelkopf ausgebildet ist.

8. Kraftfahrzeugscheinwerfer mit zumindest einer Beleuchtungsvorrichtung (10) gemäß einem der Ansprüche 1 bis 7.

## Claims

1. Lighting device for a motor vehicle headlight, the lighting device (10) comprising:
- a light module (100) comprising:
- at least one light source (110),
- a primary optics (200) for forming a light distribution from the light of the at least one light source (110),
- a heat sink (300) in thermal contact with the at least one light source (110) and adapted to dissipate heat from the at least one light source (110), and
- a holding body (400) adapted to hold the primary optics (200) in position with respect to the at least one light source (110), the holding body (400) and the heat sink (300) being connected to each other by means of at least one fastening means (500),
- and a supporting frame (700) to which the light module (100) is fixed by means of at least one adjusting screw (800), the adjusting screw (800) comprising a screw head (810) and a screw portion along a longitudinal axis (A), which screw head (810) is articulated to the light module (100) and which screw portion engages the supporting frame (700)
**characterized in that**
the light module (100) comprises at least one bearing device (900) for the articulated mounting of the screw head (810) of the at least one adjusting screw (800), which bearing device (900) comprises a first and a second bearing shell (910, 920), wherein the first and the second bearing shell (910, 920) jointly forming a joint socket by bringing the two bearing shells together, wherein the first bearing shell (910) is arranged on and integrally made with the retaining body (400) and the second bearing shell (920) is arranged on and integrally made with the cooling body (300), and wherein the bearing means (900) is arranged to support the screw head (810) of the at least one adjusting screw (800), and wherein the joint socket surrounds the screw head (810) of the at least one adjusting screw (800) in such a way that the at least one adjusting screw (800) is secured against displacement in the direction of its longitudinal axis (A), wherein the screw head (810) of the at least one adjusting screw (800) is rotatably mounted about the longitudinal axis (A) of the adjusting screw (800) in the at least one bearing means (900), so that the adjusting screw (800) and the corresponding bearing means (900) form a so-called ball joint.

2. Lighting device according to claim 1, **characterized in that** said at least one adjusting screw (800) comprises a threaded portion having a thread (830) and said supporting frame (700) comprises at least one counter-threaded element (710), said at least one counter-threaded element (710) having a counter-thread (720) corresponding to said thread (830) of said at least one adjusting screw (800).

3. Lighting device according to claim 1 or 2, **characterized in that** the light module (100) comprises at least two bearing devices (900), the lighting device (10) having a number of corresponding adjustment screws (800) corresponding to the number of bearing devices (900).

4. Lighting device according to claim 3, **characterized in that** the light module (100) comprises exactly three bearing devices (900), wherein the lighting device (10) comprises at least three adjusting screws (800) corresponding to the respective bearing devices (900).

5. Lighting device according to claim 4, **characterized in that** the counter-thread elements (710) of the supporting frame (700) corresponding to the adjusting screws (800) are arranged on the supporting frame (700) in such a way that imaginary connecting lines between the counter-thread elements (710) form a right-angled triangle, preferably an isosceles right-angled triangle.

6. Lighting device according to one of claims 3 to 5, **characterized in that** the longitudinal axes (A) of the adjusting screws (800) are arranged parallel to each other in the at least partially screwed-in state of the adjusting screws (800) on the supporting frame (700).

7. Lighting device according to one of claims 1 to 6, **characterized in that** the screw head (810) of the at least one adjusting screw (800) is designed as a joint head or as a spherical head.

8. Motor vehicle headlamp having at least one lighting device (10) according to any one of claims 1 to 7.

## Revendications

1. Dispositif d'éclairage pour un projecteur de véhicule automobile, lequel dispositif d'éclairage (10) comprend :
- un module d'éclairage (100) comprenant :
- au moins une source lumineuse (110),
- une optique primaire (200) pour former une distribution de lumière à partir de la lumière de la au moins une source de lumière (110),
- un corps de refroidissement (300) en contact thermique avec la au moins une source de lumière (110), qui est adapté pour évacuer la chaleur de la au moins une source de lumière (110), et
- un corps de maintien (400) qui est conçu pour maintenir l'optique primaire (200) dans sa position par rapport à la au moins une source lumineuse (110), le corps de maintien (400) et le corps de refroidissement (300) étant reliés l'un à l'autre au moyen d'au moins un moyen de fixation (500),
- et un cadre de support (700) sur lequel le module d'éclairage (100) est fixé par l'intermédiaire d'au moins une vis de réglage (800), la vis de réglage (800) comprenant une tête de vis (810) et une section de vis le long d'un axe longitudinal (A), laquelle tête de vis (810) est montée de manière articulée sur le module d'éclairage (100) et laquelle section de vis s'engage sur le cadre de support (700),
**caractérisé en ce que**
le module d'éclairage (100) comprend au moins un dispositif de palier (900) pour le montage articulé de la tête de vis (810) de la au moins une vis de réglage (800), lequel dispositif de palier (900) comprend une première et une deuxième coquille de palier (910, 920), la première et la deuxième coquille de palier (910, 920) forment ensemble une cavité d'articulation en réunissant les deux coquilles de palier, la première coquille de palier (910) étant disposée sur le corps de maintien (400) et fabriquée d'un seul tenant avec celui-ci, et la deuxième coquille de palier (920) étant disposée sur le corps de refroidissement (300) et fabriquée d'un seul tenant avec celui-ci, et dans lequel le dispositif de palier (900) est conçu pour supporter la tête de vis (810) de la au moins une vis de réglage (800), et dans lequel le coussinet d'articulation entoure la tête de vis (810) de la au moins une vis de réglage (800) de telle sorte que la au moins une vis de réglage (800) est bloquée contre un déplacement dans la direction de son axe longitudinal (A), dans lequel la tête de vis (810) de ladite au moins une vis de réglage (800) est montée à rotation autour de l'axe longitudinal (A) de la vis de réglage (800) dans ledit au moins un dispositif de palier (900), de sorte que la vis de réglage (800) et le dispositif de palier (900) correspondant forment ce que l'on appelle une articulation sphérique.

2. Dispositif d'éclairage selon la revendication 1, **caractérisé en ce que** ladite au moins une vis de réglage (800) comprend une partie filetée présentant un filetage (830) et **en ce que** le cadre de support (700) comprend au moins un élément de contre-filet (710), ledit au moins un élément de contre-filet (710) présentant un contre-filet (720) correspondant au filetage (830) de ladite au moins une vis de réglage (800).

3. Dispositif d'éclairage selon la revendication 1 ou 2, **caractérisé en ce que** le module d'éclairage (100) comprend au moins deux dispositifs de palier (900), le dispositif d'éclairage (10) présentant un nombre de vis de réglage (800) correspondant au nombre de dispositifs de palier (900).

4. Dispositif d'éclairage selon la revendication 3, **caractérisé en ce que** le module d'éclairage (100) comprend exactement trois dispositifs de palier (900), le dispositif d'éclairage (10) comprenant au moins trois vis de réglage (800) correspondant aux dispositifs de palier (900) correspondants.

5. Dispositif d'éclairage selon la revendication 4, **caractérisé en ce que** les éléments contre-filet (710) du cadre de support (700) correspondant aux vis de réglage (800) sont disposés sur le cadre de support (700) de telle sorte que des lignes de liaison imaginaires entre les éléments contre-filet (710) forment un triangle à angle droit, de préférence un triangle à angle droit isocèle.

6. Dispositif d'éclairage selon l'une des revendications 3 à 5, **caractérisé en ce que** les axes longitudinaux (A) des vis de réglage (800) sont disposés parallèlement les uns aux autres lorsque les vis de réglage (800) sont au moins partiellement vissées sur le cadre de support (700).

7. Dispositif d'éclairage selon l'une des revendications 1 à 6, **caractérisé en ce que** la tête de vis (810) de ladite au moins une vis de réglage (800) est réalisée sous forme de tête articulée ou de tête sphérique.

8. Projecteur de véhicule automobile comportant au moins un dispositif d'éclairage (10) selon l'une des revendications 1 à 7.
